# EUROPEAN PATENT APPLICATION

(11) **EP 4 366 126 A1**
(43) Date of publication of application: **08.05.2024**
(21) Application number: 22856289.8
(22) Date of filing: 12.08.2022
(51) Int. Cl.: H02J 50/00, H02J 50/10, H02J 50/40, H02J 50/80, H05B 6/12

(54) **METHOD AND DEVICE FOR CONFIGURING MULTIPLE RECEPTION COILS IN DEVICE USING WIRELESS POWER TRANSFER**

(30) Priority: 12.08.2021 KR 20210106940
(71) Applicant: Samsung Electronics Co., Ltd., Suwon-si, Gyeonggi-do 16677 (KR)
(72) Inventor: CHOO, Hyunjoon, Suwon-si, Gyeonggi-do 16677 (KR); KANG, Heejun, Suwon-si, Gyeonggi-do 16677 (KR); KIM, Yongwook, Suwon-si, Gyeonggi-do 16677 (KR); CHOI, Hana, Suwon-si, Gyeonggi-do 16677 (KR)
(74) Representative: Walaski, Jan Filip
(86) International application number: PCT/KR2022/012116
(87) International publication number: WO 2023/018296

(57) **Abstract**

A wireless power-driven cooking apparatus including a receiving coil with a stacked structure. More specifically, the wireless power-driven cooking apparatus may include a wireless power transmitting unit including a transmitting coil to wirelessly transmit power and a wireless power receiving unit configured to wirelessly receive power from the wireless power transmitting unit, in which the wireless power receiving unit includes a first receiving coil and a second receiving coil having a shared center with the first receiving coil whereby the second receiving coil at least partially shares a same center with the first receiving coil, and the first receiving coil and the second receiving coil are arranged at different heights along a direction perpendicular to the shared center.

## Description

### TECHNICAL FIELD

Various embodiments of the disclosure relate to a method and apparatus for configuring multilayer receiving coils in a device using wireless power transmission.

### BACKGROUND ART

Wireless power transfer (WPT) refers to a technology that removes a power line for supplying power to a home appliance or an electric vehicle, and replaces the power line wirelessly.

With the development of a technology for freely supplying power to be consumed in a wireless manner, regardless of a location of a device that requires the power, power supply and power line related paradigms are dramatically changing in Information Technology (IT) as well as applications of home appliances.

Although WPT has been developed in various frequency domains, there are many difficulties in commercialization, except for a contactless induction coupling method using low frequencies of several hundreds of kHz. The contactless induction coupling method may use a low-cost switching type power conversion element due to a relatively low frequency to provide excellent power transmission efficiency, and thus is being commercialized in a wireless shaver, a powered toothbrush, etc., and has been recently used in mobile IT devices such as mobile phones, etc.

A WPT scheme based on the contactless induction coupling method is a scheme to transmit/receive power wirelessly by mutual linkage using a transmitting-side transmitting coil (a magnetic resonator) having a power source and a receiving-side receiving coil receiving power wirelessly.

### DESCRIPTION OF EMBODIMENTS

### SOLUTION TO PROBLEM

According to an embodiment of the disclosure, there is provided a cooking apparatus driven by wireless power, the cooking apparatus including a wireless power receiving unit configured to wirelessly receive power from a wireless power transmitting unit and a processor configured to control the wireless power receiving unit. According to an embodiment of the disclosure, the wireless power receiving unit the cooking apparatus includes a first receiving coil and a second receiving coil having a shared center with the first receiving coil whereby the second receiving coil shares at least a part of a center of the first receiving coil, the first receiving coil and the second receiving coil being arranged on different layers along a longitudinal direction of the shared center.

According to an embodiment of the disclosure, there is provided a cooking apparatus driven by wireless power, the cooking apparatus including a wireless power receiving unit configured to wirelessly receive power from a wireless power transmitting unit and a processor configured to control the wireless power receiving unit. According to an embodiment of the disclosure, the wireless power receiving unit of the cooking apparatus includes a receiving coil, a pickup coil configured to supply power to a control unit including the processor, and a communication coil configured to communicate with a station including the wireless power transmitting unit.

According to an embodiment of the disclosure, there is provided a cooking apparatus driven by wireless power, the cooking apparatus including a wireless power receiving unit configured to wirelessly receive power from a wireless power transmitting unit and a processor configured to control the wireless power receiving unit. According to an embodiment of the disclosure, the wireless power receiving unit of the cooking apparatus includes a first receiving coil and a second receiving coil that does not share a center of the first receiving coil, the first receiving coil unit and the second receiving coil unit being arranged on different layers perpendicular to a plane formed by windings of coils thereof.

### BRIEF DESCRIPTION OF DRAWINGS

This disclosure may be readily understood by reference to the following detailed description and the accompanying drawings, in which reference numerals refer to structural elements.
FIG. 1 is a view for describing a wireless power-driven cooking system according to an embodiment of the disclosure.
FIG. 2A is an aerial view of a wireless power receiving unit according to an embodiment of the disclosure.
FIG. 2B is a cross-sectional view of a cooking system according to an embodiment of the disclosure.
FIG. 3A is an aerial view of a wireless power-driven cooking apparatus according to an embodiment of the disclosure.
FIG. 3B is a cross-sectional view of a wireless power-driven cooking apparatus according to an embodiment of the disclosure.
FIG. 4 is a cross-sectional view of a wireless power-driven cooking apparatus having a structure in which a plurality of receiving coils are stacked, according to an embodiment of the disclosure.
FIG. 5 is a cross-sectional view of a wireless power-driven cooking apparatus according to an embodiment of the disclosure.
FIG. 6A is a cross-sectional view of a wireless power-driven cooking apparatus including ferrite, according to an embodiment of the disclosure.
FIG. 6B is a cross-sectional view of a wireless power-driven cooking apparatus including ferrite, according to an embodiment of the disclosure.
FIG. 7 is a view for showing that a wireless power-driven cooking apparatus is stationed in a heating apparatus, according to an embodiment of the disclosure.
FIG. 8 is an aerial view of a resonant circuit of a receiving unit of a wireless power-driven cooking apparatus according to an embodiment of the disclosure.
FIG. 9A is a cross-sectional view of a heating-type wireless power-driven cooking apparatus having a structure in which a receiving coil and a pickup coil are stacked, according to an embodiment of the disclosure.
FIG. 9B is a cross-sectional view of an induction heating (IH)-type wireless power-driven cooking apparatus in which a pickup coil and a receiving coil are arranged, according to an embodiment of the disclosure.
FIG. 10 is a cross-sectional view of a wireless power receiving unit stacked in a wireless power-driven cooking apparatus according to an embodiment of the disclosure.
FIG. 11 is a cross-sectional view of a wireless power receiving unit stacked in a wireless power-driven cooking apparatus according to an embodiment of the disclosure.
FIG. 12 is a cross-sectional view of a wireless power receiving unit in a wireless power-driven cooking apparatus according to an embodiment of the disclosure.
FIG. 13 is a cross-sectional view of a wireless power receiving unit in a wireless power-driven cooking apparatus according to an embodiment of the disclosure.
FIG. 14 is a cross-sectional view of a wireless power receiving unit of a wireless power-driven cooking apparatus according to an embodiment of the disclosure.
FIG. 15 is a flowchart for describing a method of driving a wireless power-driven cooking apparatus having a structure in which receiving coils are stacked, according to an embodiment of the disclosure.
FIG. 16 is a block diagram of a heater-type wireless power-driven cooking system including a wireless power receiving unit, according to an embodiment of the disclosure.
FIG. 17 is a block diagram of an induction-type wireless power-driven cooking system including a wireless power receiving unit, according to an embodiment of the disclosure.
FIG. 18 is a block diagram of a control unit of a wireless power-driven cooking apparatus according to an embodiment of the disclosure.

### MODE OF DISCLOSURE

Throughout the disclosure, the expression "at least one of a, b or c" indicates only a, only b, only c, both a and b, both a and c, both b and c, all of a, b, and c, or variations thereof.

Terms used herein will be described in brief, and the disclosed embodiments of the disclosure will be described in detail.

Although terms used in the disclosure are selected with general terms popularly used at present under the consideration of functions in the disclosure, the terms may vary according to the intention of those of ordinary skill in the art, judicial precedents, introduction of new technology, etc. In addition, in a specific case, the applicant voluntarily may select terms, and in this case, the meaning of the terms is disclosed in a corresponding description part of an embodiment of the disclosure. Thus, the terms used in the disclosure should be defined not by the simple names of the terms but by the meaning of the terms and the contents throughout the disclosure.

Throughout the entirety of the specification of the disclosure, when it is assumed that a certain part includes a certain component, the term 'including' means that a corresponding component may further include other components unless specially described to the contrary. The term used in the embodiments of the disclosure such as "unit" or "module" indicates a unit for processing at least one function or operation, and may be implemented in hardware, software, or in a combination of hardware and software.

Hereinafter, embodiments of the disclosure will be described in detail with reference to the attached drawings to allow those of ordinary skill in the art to easily carry out the embodiments of the disclosure. However, an embodiment of the disclosure may be implemented in several different forms, and is not limited to the embodiment of the disclosure described herein. To clearly describe an embodiment of the disclosure, parts that are not associated with the description have been omitted from the drawings, and throughout the entire present disclosure, identical reference numerals refer to identical parts.

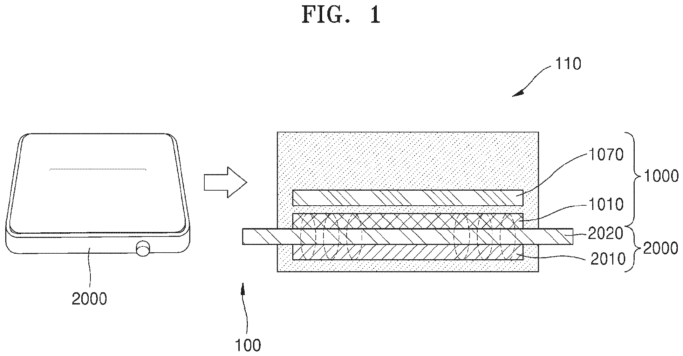

FIG. 1 is a view for describing a wireless power-driven cooking system according to an embodiment of the disclosure.

As shown in FIG. 1, a cooking apparatus 1000 of a wireless power-driven cooking system 100 may mean any type of home appliance cooking apparatuses in which cooking is performed in an induction heating (IH) manner or a heating manner. The cooking apparatus 1000 according to the disclosure includes a cooking apparatus for 'heating', but should be understood as including any home appliance apparatus operating with wireless 'electricity' supply in addition to the cooking apparatus for 'heating'.

For example, a heating apparatus 2000 of FIG. 1 may form a magnetic field by causing a current to flow in a wireless power transmitting unit 2010 including a working coil (or a transmitting coil), such that an eddy current may be generated in the cooking apparatus 1000 or the magnetic field may be induced in a wireless power receiving unit 1010 including a receiving coil. Electrical output or heating (heating) may be achieved on the cooking apparatus 1000 through the induced eddy current or the magnetic field induced in the wireless power receiving unit 1010. The cooking apparatus 1000 shown in FIG. 1 shows an induction cooking apparatus using electromagnetic induction as an example of a cooking apparatus.

However, the wireless power-driven cooking apparatus 1000 according to the disclosure is not limited to the induction cooking apparatus. That is, the cooking apparatus 1000 according to the disclosure may include a coffee machine, a toaster, an induction heater, an electric cooker, a waffle maker, a blender, an electric kettle, a pot, a frying pan, a steamer, etc., without being limited thereto. The cooking apparatus 1000 may be induced and heated by the heating apparatus 2000, and may be a container in various forms having magnetic properties to communicate with the heating apparatus 2000. The contents in the cooking apparatus 1000 driven by wireless power may be liquid such as water, tea, coffee, soup, juice, wine, etc., or solid such as butter, meat, etc., without being limited thereto. According to an embodiment of the disclosure, the cooking apparatus 1000 may be of an induction heating (IH) type, or may be of a heater type.

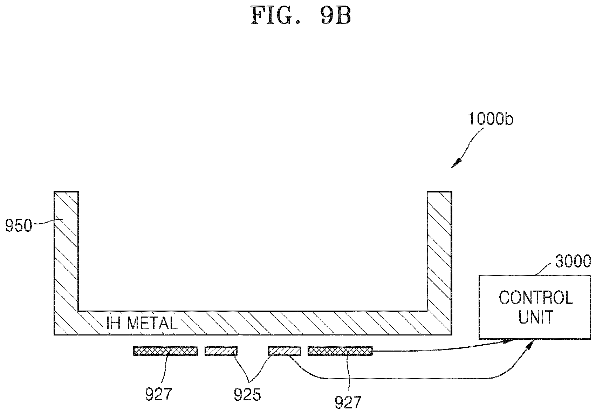

IH may refer to a method of heating a metal object using an electromagnetic induction phenomenon. For example, when an alternating current (AC) is supplied to the wireless power transmitting unit 2010 of the heating apparatus 2000, a magnetic field changing temporally may be introduced in the transmitting coil included in the wireless power transmitting unit 2010. The magnetic field generated by the transmitting coil passes through a bottom surface of the cooking apparatus 1000. When the temporally changing magnetic field passes through metal (e.g., iron, steel nickel, various kinds of alloys, etc.) included in the bottom surface of the cooking apparatus 1000, a current rotating around the magnetic field is generated in the metal. Such a rotating current is referred to as an eddy current, and a phenomenon in which a current is induced by the temporally changing magnetic field is referred to as an electromagnetic induction phenomenon. When the cooking apparatus 1000 is of the IH type, heat may be generated on the bottom surface of the cooking apparatus 1000 due to the eddy current and a resistance of metal (e.g., iron). At this time, the contents of the cooking apparatus 1000 may be heated by the generated heat. The cooking apparatus of the IH type will be described in more detail with reference to FIG. 9B. The load may include any electrical load capable of operating a home appliance as well a heater or a motor.

The cooking apparatus 1000 may include a heater, a motor, or a charging target battery, as an example of an internal load. The wireless power receiving unit 1010 may not only heat a heater that is a load or drive a motor, but also supply power to any means capable of operating with power supplied thereto. The heater may heat the contents in the cooking apparatus 1000. A shape of the heater may be various, and a material of an outer cover (e.g., iron, stainless steel, copper, aluminum, incoloy, inconel, etc.) may also be various.

The receiving coil of the cooking apparatus 1000 may receive power from the transmitting coil included in the wireless power transmitting unit 2010 of the heating apparatus 2000 wirelessly through the magnetic induction method. The magnetic induction method may be a method of delivering energy by applying the magnetic field formed by the current flowing through the transmitting coil to the receiving coil.

FIG. 1 shows a cross-section 110 of the cooking apparatus 1000 driven by wireless power and the heating apparatus 2000. Referring to 110 of FIG. 1, the heating apparatus 2000 may include the wireless power transmitting unit 2010 including the transmitting coil being supplied with commercial power in a wired manner and wirelessly transmitting power.

The cooking apparatus 1000 may include the wireless power receiving unit 1010 including a receiving coil wirelessly supplied with power by the magnetic induction method from the transmitting coil of the heating apparatus 2000. A load 1070 heated by the receiving coil may be included on the wireless power receiving unit 1010 of the cooking apparatus 1000.

The load 1070 may include a heater, a motor, a battery target battery, etc. The heating apparatus 2000 may include glass 2020 on the wireless power transmitting unit 2010. The glass 2020 of the heating apparatus 2000 may include reinforced glass such as ceramic glass, etc., such that a top plate of the heating apparatus 2000 is not easily damaged.

There is no wired connection between the heating apparatus 1000, which includes the wireless power receiving unit 1010 and the load 1070, and the heating apparatus 2000, such that the cooking apparatus 1000 may be freely separated from the heating apparatus 2000 including the wireless power transmitting unit 2010, in a cord-free state. According to an embodiment of the disclosure, the cooking apparatus 1000 may be an integral home appliance including the heating apparatus 2000.

For example, the cooking apparatus 1000 and the heating apparatus 2000 may be products handled separately and sold separately, and may be treated as one product.

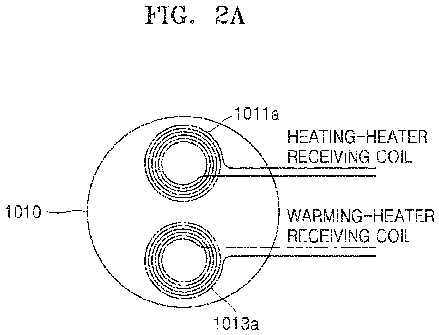

Throughout the present specification, the heating apparatus 2000 may be referred to as a 'station (device)'. FIG. 2A is an aerial view of a wireless power receiving unit according to an embodiment of the disclosure. In the wireless power receiving unit 1010 of the wireless power-driven cooking apparatus 1000 according to FIG. 2A, a heating-heater receiving coil 1011a and a warming-heater receiving coil 1013a may be arranged.

Two or more heating levels are required in the cooking apparatus 1000, such that the heating-heater receiving coil 1011a and the warming-heater receiving coil 1013a may be separately arranged.

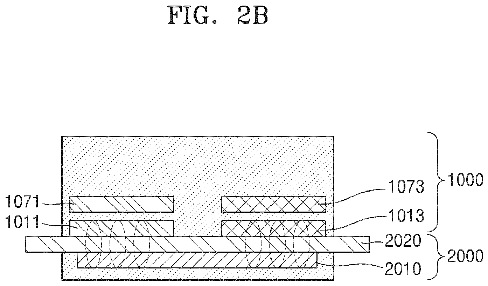

For example, a coffee machine requires a heating-heating level for boiling water and a warming-heating level for warming drip coffee. The heating-heating level may have a higher heating output than that of the warming-heating level. However, when the heating-heater receiving coil 1011a and the warming-heater receiving coil 1013a are arranged on the same layer in the wireless power receiving unit 1010 as shown in FIG. 2A, the planar area of the wireless power receiving unit 1010 may increase. FIG. 2B is a cross-sectional view of a cooking system according to an embodiment of the disclosure. FIG. 2B is a cross-sectional view showing the cooking apparatus 1000 including the wireless power receiving unit 1010 according to FIG. 2A, together with the heating apparatus 2000.

The cooking apparatus 1000 according to FIG. 2B may include a first receiving coil unit 1011 and a second receiving coil unit 1013 that have different heating levels while receiving wireless power from the wireless power transmitting unit 2010.

The wireless power-driven cooking apparatus 1000 may include a first heater 1071 connected to the first receiving coil unit 1011 for a heating output and a second heater 1073 connected to the second receiving coil unit 1013 for a heating output.

The heating output according to the first receiving coil unit 1011 and the heating output according to the second receiving coil unit 1013 may be different from each other. For example, the heating output according to the first receiving coil unit 1011 and the heating output according to the second receiving coil unit 1013 may correspond to the heating-heating level of the heating-heater receiving coil 1011a and the warming-heating level of the warming-heater receiving coil 1013a shown in FIG. 2A.

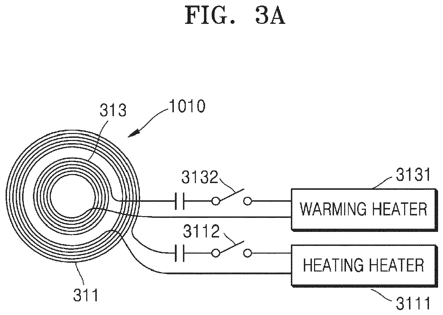

FIG. 3A is an aerial view of a wireless power-driven cooking apparatus according to an embodiment of the disclosure. The wireless power receiving unit 1010 of the wireless power-driven cooking apparatus 1000 according to FIG. 3A may include a heating-heater coil 311 and a warming-heater coil 313 that may be arranged in the wireless power receiving unit 1010 while sharing a center.

Reference to a 'Sharing a center' in the present specification may mean that centers of two or more coils are substantially shared, but may not mean that the centers do not necessarily match exactly in a mathematical and physical manner.

Thus, within the limit allowed by the planar area of the wireless power receiving unit 1010, and based on an area occupied by the number of windings of the coil, when the centers of the two or more coils partially intersect each other, it may be referred to as 'sharing a center'. The shapes of the heating-heater coil 311 and the warming-heater coil 313 may be concentric or oval, but are not be limited thereto. The shapes of the heating-heater coil 311 and the warming-heater coil 313 may be close to a square or rectangle, and may be rectangular with each round vertex.

According to an embodiment of the disclosure, the warming-heater coil 313 may be arranged inwardly from the heating-heater coil 311 with respect to the center thereof, and the heating-heater coil 311 may be arranged outwardly from the warming-heater coil 313. According to an embodiment of the disclosure, in contrary, the warming-heater coil 313 may be arranged outwardly from the heating-heater coil 311 with respect to the center thereof, and the heating-heater coil 311 may be arranged inwardly from the warming-heater coil 313.

The heating-heater coil 311 may drive a heating heater 3111, and the warming-heater coil 313 may drive a warming heater 3131 to output different-level heating outputs. A scheme according to FIG. 3A is more useful than a scheme according to FIG. 2A in that the planar areas of the wireless power receiving unit 1010 and the cooking apparatus 1000 may be reduced. Nevertheless, according to the scheme of FIG. 3A, the planar area of the wireless power receiving unit 1010 needs to be increased as much as the area where the heating-heater coil 311 and the warming-heater coil 313 are wound. In addition, according to an embodiment of the disclosure, the cooking apparatus 1000 may further include switches 3112 and 3132 for turning on/off the operations of the heating heater 3111 and the warming heater 3131, for example, a relay switch or a semiconductor switch. Referring to FIG. 3A, the wireless power receiving unit 1010, the heating heater 3111, and the warming heater 3131 may be arranged on the same layer.

In an embodiment of the disclosure, a structure may be formed in which the wireless power receiving unit 1010, the heating heater 3111, and the warming heater 3131 are arranged on different layers, while minimizing the planar areas.

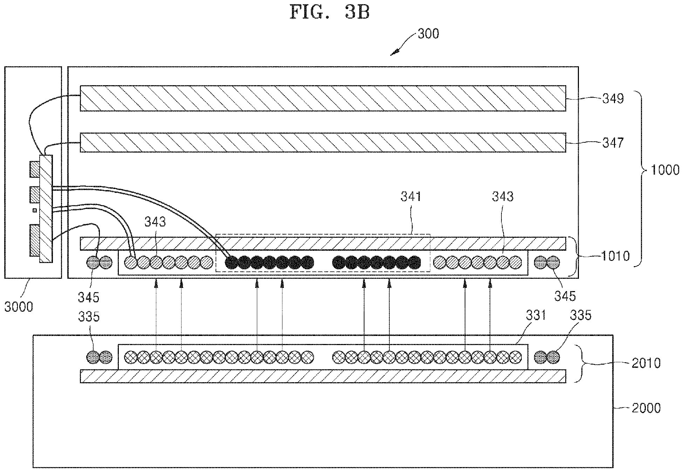

FIG. 3B is a cross-sectional view of a wireless power-driven cooking apparatus according to an embodiment of the disclosure. In FIG. 3B, a wireless power-driven cooking system 300 may include the cooking apparatus 1000, the heating apparatus 2000, and a control unit 3000.

According to an embodiment of the disclosure, the control unit 3000 may be included in the cooking apparatus 1000.

The heating apparatus 2000 may include a wireless power transmitting unit 2010 including a transmitting coil 331 connected to a commercial power source via a wire and supplying wireless power to the cooking apparatus 1000. The heating apparatus 2000 may include a receiving communication coil 335 to determine whether the cooking apparatus 1000 is stationed on the heating apparatus 2000.

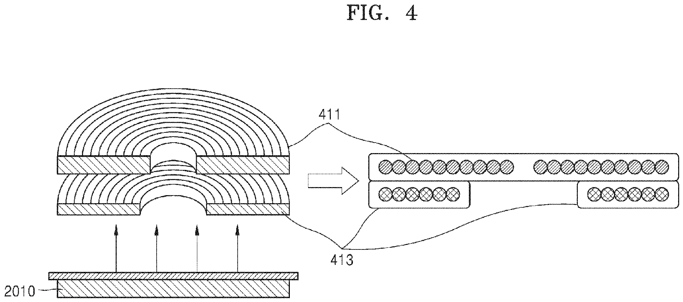

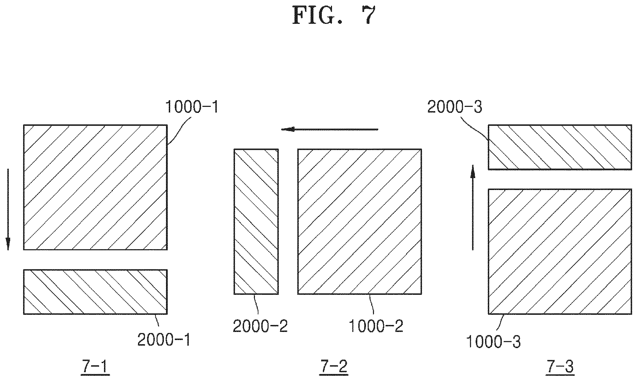

The receiving communication coil 335 may be a communication coil capable of short-range communication including near field communication (NFC) sensing, Bluetooth communication, etc. To transmit a signal to the receiving communication coil 335, the cooking apparatus 1000 may include the wireless power receiving unit 1010 including a transmitting communication coil 345. When the cooking apparatus 1000 is stationed on the heating apparatus 2000, it may mean that the cooking apparatus 1000 is on-stationed on the heating apparatus 2000. For example, the stationing may include the meaning that docking is made such that wireless power transmission and reception may be performed between the cooking apparatus 1000 and the heating apparatus 2000. Herein, 'being on-stationed' may mean not only that the cooking apparatus 1000 is on-stationed from top to bottom, but also that the cooking apparatus 1000 is docked from a side or from bottom to top to the heating apparatus 2000, depending on a structure of the cooking apparatus 1000. This will be described in more detail with reference to FIG. 7. FIG. 4 is a cross-sectional view of a wireless power-driven cooking apparatus having a structure in which a plurality of receiving coils are stacked, according to an embodiment of the disclosure. Referring to FIG. 4, a first receiving coil unit 411 and a second receiving coil unit 413, which receive power wirelessly from the wireless power transmitting unit 2010, may be arranged on different layers in a stacked structure without being on the same plane.

According to the implementation of the cooking apparatus, in the case of a plurality of coils receiving the wireless power, the plurality of coils may be stacked on a plurality of layers.

According to an embodiment of the disclosure, when there are three receiving coils, they may be stacked in a 3-layer manner, and when there are four receiving coils, they may be stacked in a 4-layer manner.

In an embodiment of the disclosure, when the number of windings of a first receiving coil among three receiving coils is relatively large and the number of windings of a second receiving coil and a third receiving coil is relatively small, the first receiving coil may be included in one layer and the second receiving coil and the third receiving coil may be included in another layer, such that the three receiving coils may be stacked on two layers. According to an embodiment of the disclosure, in the case of four receiving coils, the receiving coils may be stacked in various ways, such as 2+1+1, 3+1, and 2+2, depending on the number of windings of each receiving coil. In this way, the cross-sectional area of the cooking apparatus (wireless power receiving unit) may be reduced by stacking the receiving coils on a plurality of layers.

For example, the two receiving coil arrangement schemes according to FIG. 2A or FIG. 3A require a relatively broader planar area than the receiving coil arrangement scheme according to FIG. 4. On the other hand, in the receiving coil arrangement method according to FIG. 4, a planar area may be relatively small even when each receiving coil has the same number of windings as the receiving coil of FIG. 2A or FIG. 3A. Therefore, the receiving coil arrangement scheme of FIG. 4 makes it possible to manufacture the cooking apparatus in a compact size. According to an embodiment of the disclosure, when the first receiving coil unit 411 and the second receiving coil unit 413 are stacked, they may share the center thereof. In this case, around the first receiving coil unit 411 and the second receiving coil unit 413, coils may be wound in a circular or oval shape, without being limited thereto.

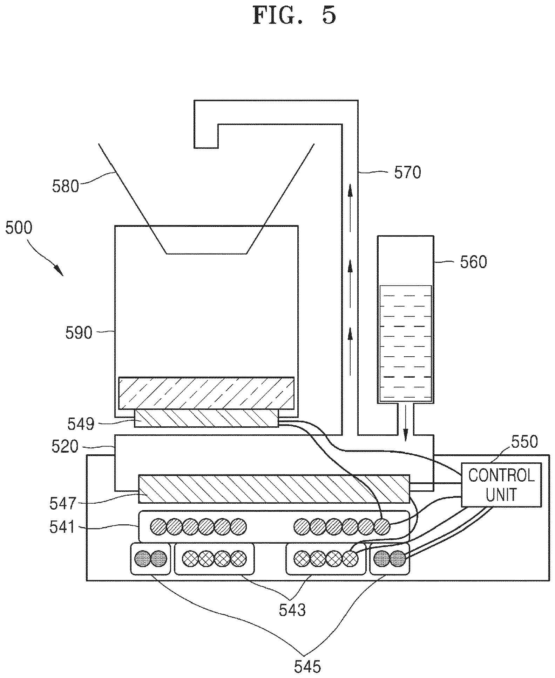

Depending on the shape of the cooking apparatus, a coil may be wound in a rectangular shape having round corners and in a planar shape that may not be defined in a specific shape. Thus, in the present specification, for convenience, when the coil is referred to as a 'concentric circle sharing the center', it needs to be interpreted that the shape in which the coil is wound is not only a 'circular shape', but also any shape in which the coil is wound until the coil starts from one point and is rewound to that point again, but the center thereof is shared. FIG. 5 is a cross-sectional view of a wireless power-driven cooking apparatus according to an embodiment of the disclosure. In FIG. 5, an example will be described where a wireless power-driven cooking apparatus according to an embodiment of the disclosure is a coffee machine.

Referring to FIG. 5, a coffee machine 500 according to an embodiment of the disclosure may be driven at two heating levels by two stacked receiving coils. In the coffee machine 500, a heating-heating level for heating cold water supplied from a water tank 560 is required.

Upon completion of a process in which the heated water is moved through a water moving tube 570 and the finally extracted coffee is contained in a coffee pot 590 after passing through coffee beans contained in a coffee extractor 580, a warming-heating level for warming the coffee pot 590 is required.

Thus, the coffee machine 500 requires at least two heating levels. According to an embodiment of the disclosure, in the coffee machine 500 shown in FIG. 5, a heating first receiving coil 541 and a warming second receiving coil 543 may be stacked on two layers. The heating first receiving coil 541 may be connected to a heating heater 547 and heat water.

The warming second receiving coil 543 may be connected to the warming heater 549 to maintain the coffee in the coffee pot 590 in a warming state. According to an embodiment of the disclosure, when the coffee pot 590 is placed on a station (not shown) in the coffee machine 500 of FIG. 5, a communication coil 545 may transmit to the station, a signal indicating that the coffee pot 590 has been stationed. According to an embodiment of the disclosure, the communication coil 545 may be arranged outwardly from the warming second receiving coil 543 while sharing the center thereof with the warming second receiving coil 543. In an embodiment of the disclosure, the communication coil 545 for informing whether the coffee pot 590 is placed on the station may be arranged inwardly from the warming second receiving coil 543 while sharing the center thereof with the warming second receiving coil 543. In an embodiment of the disclosure, the station may be the heating apparatus 2000. The communication coil 545 may be arranged on the same layer as the warming second receiving coil 543 because the number of windings of the warming second receiving coil 543 is less than that of the heating first receiving coil 541, thus occupying a smaller planar area than the heating first receiving coil 541. In an embodiment of the disclosure, unlike in FIG. 5, the heating first receiving coil 541 may be arranged on a lower layer, and the warming second receiving coil 543 may be arranged on an upper layer.

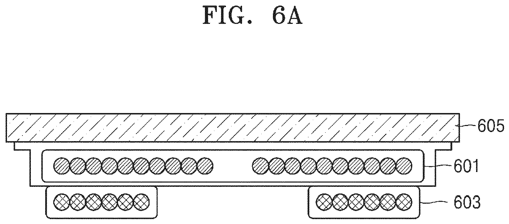

FIG. 6A is a cross-sectional view of a wireless power-driven cooking apparatus including ferrite according to an embodiment of the disclosure.

Referring to FIG. 6A, a ferrite 605 may be arranged on a top layer of two receiving coils 601 and 603.

The ferrite 605 as a magnetic body may enhance a magnetic field according to a magnetic flux passing through the receiving coils 601 and 603.

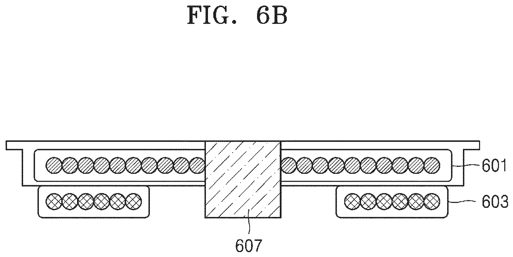

The first receiving coil 601 and the second receiving coil 603 may share the ferrite 605 arranged on an upper end of a path through which the magnetic flux passes. FIG. 6B is a cross-sectional view of a wireless power-driven cooking apparatus including ferrite according to an embodiment of the disclosure. Referring to FIG. 6B, a ferrite 607 may be arranged in a longitudinal direction of a center shared between the two receiving coils 601 and 603.

A structure in which the ferrite 607 is arranged in the center according to FIG. 6A may reduce a stacking thickness compared to the stacking structure according to FIG. 6A.

In FIG. 6B, the first receiving coil 601 and the second receiving coil 603 may share the ferrite 607 arranged in the center on the path through which the magnetic flux passes. FIG. 7 is a view for showing that a wireless power-driven cooking apparatus is stationed in a heating apparatus, according to an embodiment of the disclosure. Referring to FIG. 7, cooking apparatuses 1000-1, 1000-2, and 1000-3 show various examples stationed on heating apparatuses 2000-1, 2000-2, and 2000-3.

In an embodiment of the disclosure, the heating apparatuses 2000-1, 2000-2, and 2000-3 may be first home appliances, and the cooking apparatuses 1000-1, 1000-2, and 1000-3 may be second home appliances separately from the heating apparatuses 2000-1, 2000-2, and 2000-3.

For example, the heating apparatuses 2000-1, 2000-2, and 2000-3 may be devices for transmitting wireless power or home appliances functioning as heating apparatuses.

The cooking apparatuses 1000-1, 1000-2, and 1000-3 may be home appliances supplied with wireless power from the heating apparatuses 2000-1, 2000-2, and 2000-3 to independently use an electric power source. 7-1 of FIG. 7 according to an embodiment of the disclosure shows a form in which the cooking apparatus 1000-1 is stationed on the heating apparatus 2000-1 from top to bottom. For example, for a coffee machine, an induction heater, a blender, a steamer, a battery charger, etc., the cooking apparatus 1000-1 may be stationed on the heating apparatus 2000-1 in such a manner as 7-1.

7-2 of FIG. 7 according to an embodiment of the disclosure shows a form in which the cooking apparatus 1000-2 is stationed on the heating apparatus 2000-2 from a side. For example, when the heating apparatus 2000-2 is directly connected to the power source, like a mosquito fumigator, and a detachable mosquito fumigator is to be sold separately from the heating device 2000-2, the detachable mosquito fumigator may be stationed from a side.

As may be seen from an embodiment of the disclosure, a cooking apparatus according to the disclosure may include all kinds of apparatuses that perform 'heating' as well as a home appliance for cooking. 7-3 of FIG. 7 according to an embodiment of the disclosure shows a scheme in which the cooking apparatus 1000-3 is stationed on the heating apparatus 2000-3 from bottom to top. For example, the heating apparatus 2000-3 is attached to the ceiling, and the cooking apparatus 1000-3 may be stationed on the heating apparatus 2000-3 as in 7-3 when the cooking apparatus 1000-3 includes a lamp.

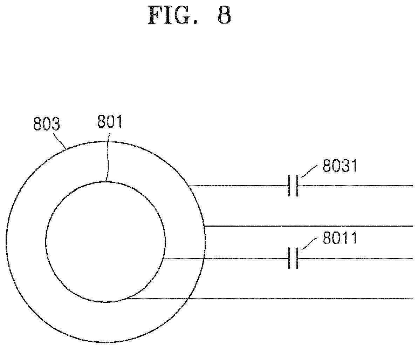

At this time, in the cooking apparatus 1000-3 and the heating apparatus 2000-3, a support for supporting the cooking apparatus 1000-3 to prevent the cooking apparatus 1000-3 from falling down may be used. In an embodiment of the disclosure, the cooking apparatus 1000-3 and the heating apparatus 2000-3 may be coupled to each other through a coupling method based on rotation. FIG. 8 is an aerial view of a resonant circuit of a wireless power receiving unit of a wireless power-driven cooking apparatus according to an embodiment of the disclosure. Referring to FIG. 8, a wireless power-driven cooking apparatus may generate a heating output by resonance of a receiving coil and a resonant capacitor connected to the receiving coil.

According to an embodiment of the disclosure, the first receiving coil 801 may be connected to a first resonant capacitor 8011 to generate a first heating output through resonance, and the second receiving coil 803 may be connected to a second resonant capacitor 8031 to generate a second heating output through resonance.

According to an embodiment of the disclosure, the wireless power-driven cooking apparatus may include not only a cooking apparatus for heating, but also a home appliance for driving a motor or using power in a different manner. According to an embodiment of the disclosure, the first receiving coil 801 may be connected to the first resonant capacitor 8011 to generate an output for driving the motor at a first torque or a first speed through resonance, and the second receiving coil 803 may be connected to the second resonant capacitor 8031 to generate an output for driving the motor at a second torque or a second speed through resonance.

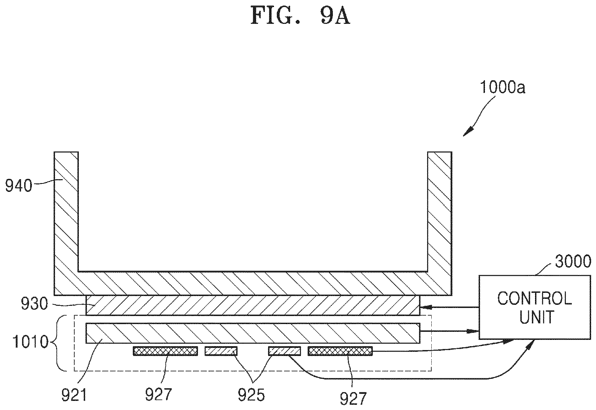

According to an embodiment of the disclosure, the first receiving coil 801 may be connected to the first resonant capacitor 8011 to generate an output for charging a battery rapidly through resonance, and the second receiving coil 803 may be connected to the second resonant capacitor 8031 to generate an output for charging the battery slowly through resonance. The foregoing description accords with an embodiment of the disclosure, in which a load connected to a receiving coil may include a load driven by electricity as well as a heater, a motor, and a secondary cell (battery). According to an embodiment of the disclosure, for three or more receiving coils, a corresponding resonance capacitor may be connected to each receiving coil such that a cooking apparatus may generate an electrical output through resonance between the receiving coil and the resonant capacitor. FIG. 9A is a cross-sectional view of a heater-type wireless power-driven cooking apparatus having a structure in which a receiving coil and a pickup coil are stacked, according to an embodiment of the disclosure.

Referring to FIG. 9A, according to an embodiment of the disclosure, a cooking apparatus 1000a as a heating(heater)-type cooking apparatus may include a wireless power receiving unit 1010.

The wireless power receiving unit 1010 may further include a communication coil 925 and a pickup coil 927 in addition to the receiving coil 921.

The pickup coil 927 may receive wireless power and supply alternating current (AC) power to a switched-mode power supply (SMPS) (not shown) that supplies direct current (DC) power to the control unit 3000. The SMPS may convert supplied AC power into DC power and supply the DC power to the control unit 3000 including a printed circuit board (PCB).

According to an embodiment of the disclosure, the SMPS may be formed in a PCB-integrated form with the control unit 3000. The communication coil 925 may also be referred to as an NFC antenna coil. The communication coil 925 may support NFC short-range communication and when the cooking apparatus 1000a is placed on a station that may be referred to as the heating apparatus 2000, it may be used to transmit a signal to a communication coil included in the heating apparatus 2000, thus being used to sense placement of the cooking apparatus 1000a on the heating apparatus 2000.

According to an embodiment of the disclosure, the short-range communication through the communication coil 925 may be any one of not only NFC communication, but also Bluetooth communication, Zigbee communication, Infrared Data Association (IrDA) communication, Wireless Fidelity (WiFi) Direct (WFD) communication, ultra-wideband (UWB) communication, Ant + communication, etc. Referring to FIG. 9A, the wireless power receiving unit 1010 may include two layers including a layer including a receiving coil 921 and a layer including a pickup coil 927 and a communication coil 925. In this case, the layer including the receiving coil 921 may be arranged on the layer including the pickup coil 927 and the communication coil 925 which may be arranged under the layer including the receiving coil 921, or vice versa.

In this case, the receiving coil 921 may include one receiving coil or a plurality of receiving coils. In an embodiment of the disclosure, the wireless power receiving unit 1010 may include the receiving coil 921 that may be used to heat a heater 930. The heater 930 may heat a container 940 of the cooking apparatus 1000a with heated thermal energy.

FIG. 9B is a cross-sectional view of an IH-type wireless power-driven cooking apparatus in which a pickup coil and a receiving coil are arranged, according to an embodiment of the disclosure. An IH-type cooking apparatus 1000b may form a magnetic field by allowing a current to flow in the transmitting coil included in the wireless power transmitting unit 2010 of the heating apparatus 2000, thereby allowing an eddy current to flow into an IH metal container 950 to heat the container 950.

Thus, a receiving coil such as in the heater-type cooking apparatus 1000a may not be separately provided in the IH-type cooking apparatus 1000b.

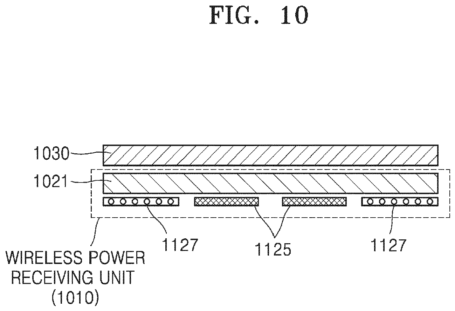

However, the IH-type cooking apparatus 1000b may include the pickup coil 927 and the communication coil 925, as in FIG. 9A. Referring to FIG. 9B, the pickup coil 927 and the communication coil 925 may be provided under the container 950 such that the pickup coil 927 may supply power to the control unit 3000 through an SMPS (not shown), and the communication coil 925 may transmit a signal indicating that the container 950 is placed in the heating apparatus 2000 when the container 950 is placed on a station unit (not shown) that may be referred to as the heating apparatus 2000 of the cooking apparatus 1000b. FIG. 10 is a cross-sectional view of a wireless power receiving unit stacked in a wireless power-driven cooking apparatus according to an embodiment of the disclosure.

The wireless power receiving unit 1010 according to FIG. 10 may include a receiving coil 1021 for heating a heater 1030, a pickup coil 1127 for supplying power to the control unit 3000, and a communication coil 1125 for short-range communication between the cooking apparatus 1000 and the heating apparatus 2000.

In the wireless power receiving unit 1010, the pickup coil 1127 and the communication coil 1125 having a small number of windings form one layer, and the receiving coil 1021 used to heat a heater 1130 may form another layer.

The receiving coil 1021 may include one receiving coil or a plurality of two or more receiving coils located on different layers.

According to an embodiment of the disclosure, the pickup coil 1127 and the communication coil 1125 may at least partially share the center. According to an embodiment of the disclosure, the communication coil 1125 may be arranged inwardly and the pickup coil 1127 may be arranged outwardly, and in an embodiment of the disclosure, the communication coil 1125 may be arranged outwardly and the pickup coil 1127 may be arranged inwardly.

According to an embodiment of the disclosure, the receiving coil 1021, the pickup coil 1127, and the communication coil 1125 may all be arranged on one layer.

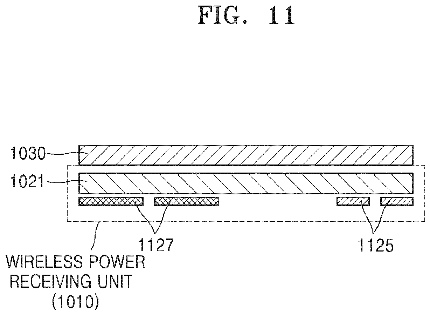

FIG. 11 is a cross-sectional view of a wireless power receiving unit stacked in a wireless power-driven cooking apparatus according to an embodiment of the disclosure.

According to an embodiment of the disclosure, the wireless power receiving unit 1010 according to FIG. 11 may include the receiving coil 1021 for heating the heater 1030, the pickup coil 1127 for supplying power to the control unit 3000, and the communication coil 1125 for short-range communication between the cooking apparatus 1000 and the heating apparatus 2000.

In the wireless power receiving unit 1010, the pickup coil 1127 and the communication coil 1125 having a smaller number of windings than that of the receiving coil 1021 form one layer, and the receiving coil 1021 used to heat the heater 1130 may form another layer.

The receiving coil 1021 may include one receiving coil or a plurality of two or more receiving coils arranged on different layers.

According to an embodiment of the disclosure, the pickup coil 1127 and the communication coil 1125 may be arranged with a separate center. For example, even when the pickup coil 1127 and the communication coil 1125 are arranged on the same layer, they may not share the center.

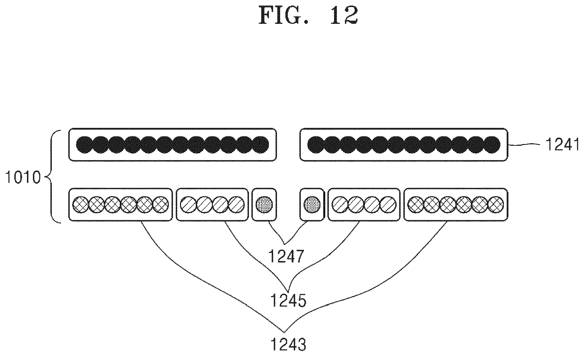

At this time, the pickup coil 1127 and the communication coil 1125 have a relatively small number of windings, such that a winding shape is not necessarily circular or elliptical. FIG. 12 is a cross-sectional view of a wireless power receiving unit in a wireless power-driven cooking apparatus according to an embodiment of the disclosure. The wireless power receiving unit 1010 according to FIG. 12 may include a first receiving coil unit 1241, a second receiving coil unit 1243, a pickup coil 1245, and a communication coil 1247.

According to an embodiment of the disclosure, the first receiving coil unit 1241 having the largest number of windings may be arranged on the top, under which the second receiving coil unit 1243, the pickup coil 1245, and the communication coil 1247 may be arranged, at least partially sharing the center.

At this time, the communication coil 1247, the pickup coil 1245, and the second receiving coil unit 1243 may be sequentially arranged in a direction away from the center.

The communication coil 1247, the pickup coil 1245, and the second receiving coil unit 1243 may form a concentric circle. Alternatively, the communication coil 1247, the pickup coil 1245, and the second receiving coil unit 1243 may be arranged on one layer, but one coil or two coils of these coils may not share the center with each other. For example, an NFC tag may be used as the communication coil 1247 to inform that the cooking apparatus 1000 to is stationed on the heating apparatus 2000. The communication coil 1247 may be arranged separately without sharing the center with the pickup coil 1245 or the second receiving coil unit 1243. Alternatively, the pickup coil 1245 may be separately arranged on the same layer so as to be close to the control unit 3000. In an embodiment of the disclosure, for designing of the cooking apparatus 1000, an order in which the three coils are arranged in a direction away from the center shared at least partially thereby may be changed as follows.
(1) pickup coil 1245 - second receiving coil unit 1243 - communication coil 1247
(2) second receiving coil unit 1243 - communication coil 1247 - pickup coil 1245
(3) second receiving coil unit 1243 - pickup coil 1245 - communication coil 1247
(4) pickup coil 1245 - communication coil 1247 - second receiving coil unit 1243
(5) communication coil 1247 - second receiving coil unit 1243 - pickup coil 1245

Arrangement according to FIG. 12 may be mainly used when the number of coil windings of the first receiving coil unit 1241 is largest.

For example, when the number of windings of all of the second receiving coil unit 1243, the pickup coil 1245, and the communication coil 1247 is less than or near the number of coil windings of the first receiving coil unit 1241, the arrangement according to FIG. 12 may be appropriate.

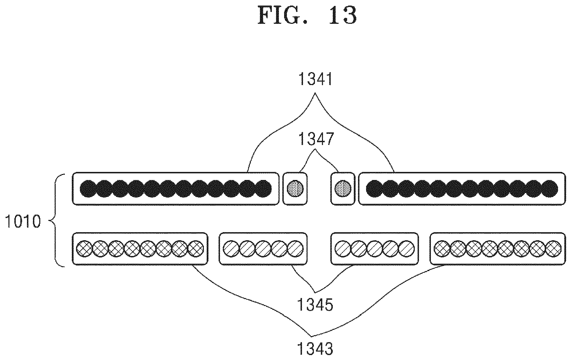

According to an embodiment of the disclosure, the first receiving coil unit 1241 having the largest number of windings may be arranged under the second receiving coil unit 1243, the pickup coil 1245, and the communication coil 1247, which may be arranged on the same layer while at least partially sharing the center. FIG. 13 is a cross-sectional view of a wireless power receiving unit in a wireless power-driven cooking apparatus according to an embodiment of the disclosure.

According to FIG. 13, a first receiving coil unit 1341 and a communication coil 1347 may form one layer, and a second receiving coil unit 1343 and a pickup coil 1345 may be arranged on another layer.

As described with reference to FIG. 12, the order of the coils arranged in the direction away from the center on each layer may be changed.

For example, the communication coil 1347 may be arranged outwardly from the center with respect to the first receiving coil unit 1341.

In addition, the pickup coil 1345 may also be arranged outwardly from the center with respect to the second receiving coil unit 1343. According to an embodiment of the disclosure, the number of windings of the communication coil 1347 is less than that of other coils, such that the communication coil 1347 may be arranged on the same layer as that of the first receiving coil unit 1341 without sharing the center with the first receiving coil unit 1341. The arrangement of the wireless power receiving unit 1010 according to FIG. 13 may be used when the number of windings of the first receiving coil unit 1341 is greater than that of the second receiving coil unit 1343 by a small difference.

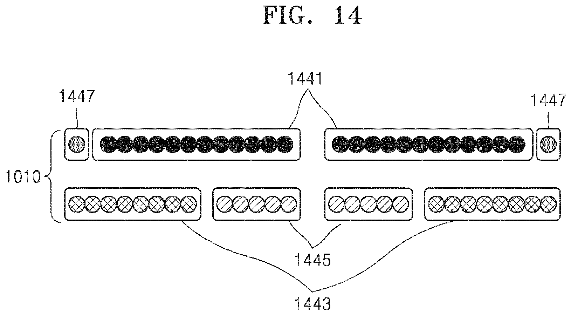

FIG. 14 is a cross-sectional view of a wireless power receiving unit of a wireless power-driven cooking apparatus according to an embodiment of the disclosure.

In the wireless power receiving unit 1010 according to FIG. 14, a communication coil 1447 may be arranged outwardly while sharing the center with the first receiving coil unit 1441.

Under the communication coil 1447, a second receiving coil unit 1443 and a pickup coil 1445 may be arranged while sharing the center.

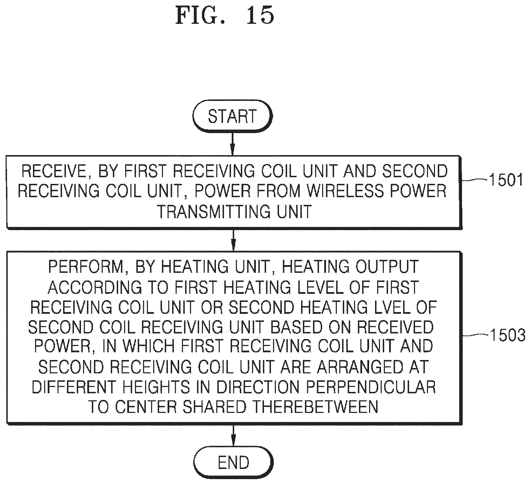

In an embodiment of the disclosure, the communication coil 1447 and the first receiving coil unit 1441 may be arranged under the second receiving coil unit 1443 and the pickup coil 1445, which may be arranged on the communication coil 1447 and the first receiving coil unit 1441. FIG. 15 is a flowchart for describing a method of driving a wireless power-driven cooking apparatus having a structure in which receiving coils are stacked, according to an embodiment of the disclosure.

In operation 1501, a first receiving coil unit and a second receiving coil unit of the cooking apparatus may wirelessly receive power from a wireless power transmitting unit of a heating apparatus.

In operation 1503, the first receiving coil unit and/or the second receiving coil unit of the cooking apparatus may output energy based on the received power.

According to an embodiment of the disclosure, the first receiving coil unit or the second receiving coil unit of the cooking apparatus may perform heating output.

In this case, the heating output may be replaced with power output of another type. For example, the power output of another type may be motor rotation output, battery charging output, etc., and the use of power output from the first receiving coil unit and the second receiving coil unit may vary according to a type of a load. In this case, the first receiving coil unit and the second receiving coil unit may be arranged on different layers in a longitudinal direction of the center shared thereby. At this time, when the first receiving coil unit and the second receiving coil unit at least partially share the center, it may mean that at least a part of the center of the first receiving coil unit and at least a part of the center of the second receiving coil unit overlap with each other and may not necessarily match each other completely in a mathematical and physical manner. In addition, the pickup coil may supply power for controlling the cooking apparatus driven by wireless power to a control unit. According to an embodiment of the disclosure, the pickup coil may be arranged under or on the first receiving coil unit and the second receiving coil unit, or on the same layer as one of the first receiving coil unit and the second receiving coil unit.

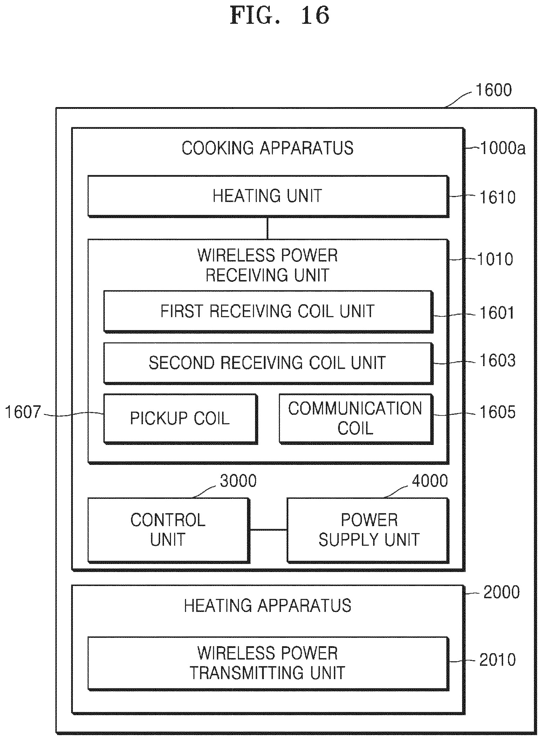

When the pickup coil is arranged on the same layer as one of the first receiving coil unit and the second receiving coil unit, the pickup coil may be arranged inwardly from any one of the first receiving coil unit and the second receiving coil unit. FIG. 16 is a block diagram of a heater-type wireless power-driven cooking system including a wireless power receiving unit, according to an embodiment of the disclosure. A wireless power-driven cooking system 1600 according to an embodiment may include the heater-type cooking apparatus 1000a and the heating apparatus 2000.

The cooking apparatus 1000a may include the wireless power receiving unit 1010, a heating unit 1610, a control unit 3000, and a power supply unit 4000.

The cooking apparatus 1000a and the heating apparatus 2000 may be home appliances that may be sold as separate products. The power supply unit 4000 may be an SMPS that receives AC power from a pickup coil 1607 and supplies DC power to the control unit 3000.

In addition, the power supply unit 4000 may include, in addition to the control unit 3000, an inverter and/or a converter that supplies AC/DC power, when another component in the cooking apparatus 1000a or the heating apparatus 2000 requires AC/DC power rather than commercial AC power.

The power supply unit 4000 may include a rectifying circuit for converting commercial AC power to DC power source and maintain a DC voltage through a DC link capacitor. An inverter connected to a DC connection capacitor may generate AC power of various frequencies and magnitudes required by the cooking apparatus 1000a.

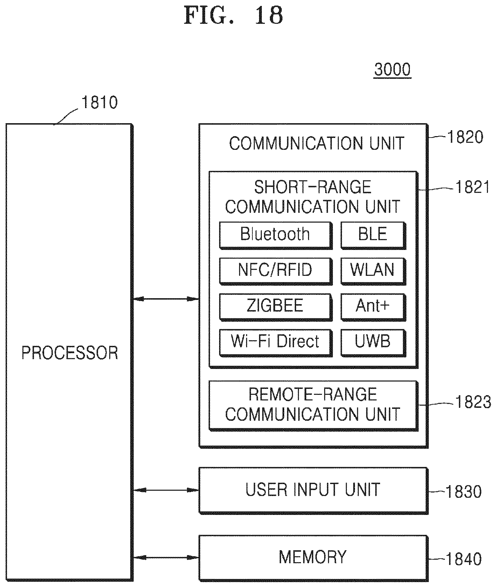

The converter may generate DC power of various magnitudes required by the cooking apparatus 1000a. The control unit 3000 may be used to control the cooking apparatus 1000a. The control unit will be described in more detail with reference to FIG. 18.

The first receiving coil unit 1601, the second receiving coil unit 1603, the pickup coil 1607, and the communication coil 1605 of the wireless power receiving unit 1010 in the cooking apparatus 1000a may wirelessly receive AC power by sharing magnetic flux with a transmitting coil included in the wireless power transmitting unit 2010. According to an embodiment of the disclosure, the wireless power receiving unit 1010 may further include a plurality of receiving coil units such as a third receiving coil unit, a fourth receiving coil unit, etc., which are not shown, as necessary.

The first receiving coil unit 1601, the second receiving coil unit 1603, the pickup coil 1607, and the communication coil 1605 may be stacked according to the number of windings of each of them. A detailed embodiment of the disclosure regarding the stacking has been described in detail with reference to FIG. 9A and 10 through 14, and thus will be omitted herein.

The first receiving coil unit 1601 and/or the second receiving coil unit 1603 may heat a heating unit 1610. The heating unit 1610 may include a plurality of different heating units connected to the first receiving coil unit 1601 and the second receiving coil unit 1603, respectively.

The plurality of heating units may have different heating outputs. According to an embodiment of the disclosure, the first receiving coil unit 1601 and the second receiving coil unit 1603 may be electrically insulated from each other and may be electrically connected to each other. When the first receiving coil unit 1601 and the second receiving coil unit 1603 are electrically insulated from each other, a plurality of heating units included in the heating unit 1610 may be independently heated.

When the first receiving coil unit 1601 and the second receiving coil unit 1603 are electrically connected, upon reception of power wirelessly transferred through the wireless power transmitting unit 2010, the first receiving coil unit 1601 and the second receiving coil unit 1603 may be simultaneously driven to generate one electrical output resulting from combining electrical output from each of the first receiving coil unit 1601 and the second receiving coil unit 1603. In this case, the first receiving coil unit 1601 and/or the second receiving coil unit 1603 may heat the heating unit 1610.

With such a driving scheme, one receiving coil unit having the same number of windings as a sum of the number of windings of the first receiving coil unit 1601 and the number of windings of the second receiving coil unit 1603 or having the same inductance as that of the first receiving coil unit 1601 and the second receiving coil unit 1603 may output the same output in a state where the first receiving coil unit 1601 and the second receiving coil unit 1603 are stacked. For example, when the first receiving coil unit 1601 and the second receiving coil unit 1603 are electrically connected, one heating level may be output. In addition, when the first receiving coil unit 1601 and the second receiving coil unit 1603 are electrically connected in a stacked state, the planar space efficiency of the cooking apparatus 1000a may be improved compared to when one receiving coil unit is used spread widely. The heating apparatus 2000 may include a wireless power transmitting unit 2010 which may include a transmitting coil. The heating apparatus 2000 may be referred to as a station.

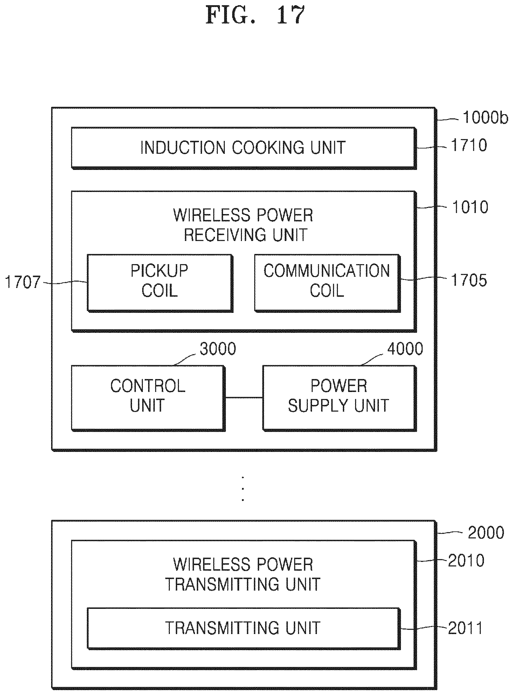

The wireless power transmitting unit 2010 may receive commercial AC power and may receive AC power generated by a separate power source (not shown). The AC power input to the wireless power transmitting unit 2010 may be wirelessly transmitted to the wireless power receiving unit 1010 in the cooking apparatus 1000a through the wireless power transmitting unit 2010. According to an embodiment of the disclosure, the cooking system 1600 may be an integrated home appliance including both the cooking apparatus 1000a and the heating apparatus 2000. FIG. 17 is a block diagram of an induction-type wireless power-driven cooking system including a wireless power receiving unit, according to an embodiment of the disclosure.

Referring to FIG. 17, a cooking apparatus 1000b may include the wireless power receiving unit 1010, the control unit 3000, the power supply unit 4000, and an induction cooking unit 1710.

The induction cooking unit 1710 may be a pot, a frying pan, etc., including induction heating metal.

The power supply unit 4000 may be an SMPS that receives AC power from a pickup coil 1707 and supplies DC power to the control unit 3000. The communication coil 1705 may be used to transmit a sensing signal to a communication coil included in the heating apparatus 2000 when the induction cooking unit 1710 is placed on the heating apparatus 2000.

The communication coil 1705 may be referred to as an NFC antenna coil and may use short-range communication such as NFC or Bluetooth.

An eddy current may be formed on a bottom surface of the induction cooking unit 1710 by a transmitting coil 2011 of the wireless power transmitting unit 2010 of the heating apparatus 2000. FIG. 18 is a block diagram of a control unit of a wireless power-driven cooking apparatus according to an embodiment of the disclosure.

As shown in FIG. 18, the control unit 3000 included in the wireless power-driven cooking apparatuses 1000a and 1000b according to an embodiment of the disclosure may include a processor 1810, a communication unit 1820, a user input unit 1830, and a memory 1840.

However, all the illustrated elements are not essential elements.

The wireless power-driven cooking apparatuses 1000a and 1000b may be implemented by a larger or smaller number of elements than the illustrated elements. Although not shown in FIG. 18, the control unit 3000 may further include an output unit, a display unit, and the like. Hereinafter, the aforementioned components will be described sequentially. The processor 1810 may generally control the overall operation of the wireless power-driven cooking apparatus 1600 according to an embodiment of the disclosure.

For example, the processor 1810 may control the communication unit 1820, the user input unit 1830, the memory 1840, etc., overall, by executing programs stored in the memory 1840.

According to an embodiment of the disclosure, the processor 1810 may include an artificial intelligence (Al) processor for generating a learning network model, without being limited thereto. According to an embodiment of the disclosure, the AI processor may be implemented as a separate chip from the processor 1710.

According to an embodiment of the disclosure, the AI processor may be a general-purpose chip. A short-range wireless communication unit 1821 may include a Bluetooth communication unit, a Bluetooth Low Energy (BLE) communication unit, an NFC unit, a wireless local area network (WLAN) (WiFi) communication unit, a ZigBee communication unit, an IrDA communication unit, a WiFi Direct (WFD) communication unit, an ultra-wideband (UWB) communication unit, an Ant+ communication unit, etc., without being limited thereto. The short-range communication unit 1821 may inform the heating apparatus 2000 of the presence of the cooking apparatus 1000a and 1000b by transmitting a signal to the heating apparatus 2000 through the communication coils 1605 and 1705 when the cooking apparatuses 1000a and 1000b are placed on the heating apparatus 2000.

The heating apparatus 2000 may block or reduce wireless power output based on sensing information of the cooking apparatuses 1000a and 1000b.

In this case, the communication coil may use a communication scheme using NFC, like an NFC antenna coil. When short-range communication such as NFC is used, by recognizing the NFC tag attached to the cooking apparatuses 1000a and 1000b, the heating apparatus 2000 may sense that the cooking apparatuses 1000a and 1000b are placed on the heating apparatus 2000. According to an embodiment of the disclosure, the cooking apparatus 1000 and the heating apparatus 2000 may be one home appliance. When the cooking apparatus 1000 is placed on the heating apparatus 2000, the heating apparatus 2000 may also obtain identification information of the cooking apparatus 1000. A remote-range communication unit 1823 is not necessary for the control unit 3000 according to an embodiment of the disclosure, but may be used to communicate with an external device (a mobile device or a computing device) when the cooking apparatus 1000 is remotely controlled by the external device in an Internet of Things (loT) environment. The user input unit 1830 may mean a means for inputting data for controlling the cooking apparatus 1000 by a user.

For example, the user input unit 1830 may include, but not limited to, a keypad, a dome switch, a touch pad (a contact-capacitive type, a pressure-resistive type, an infrared sensing type, a surface ultrasonic conduction type, an integral strain gauge type, a piezoelectric effect type, etc.), a jog wheel, a jog switch, a dial switch, or the like.

According to an embodiment of the disclosure, the user input unit 1830 may include a button unit including a power button, a heating control button, and the like. The user input unit 1830 may further include a microphone (not shown) for receiving user's voice input.

The microphone may receive an external audio signal and process the received audio signal into electric data.

For example, a microphone may receive an audio signal (e.g., a voice command) from an external device or speaker. The microphone may use various noise cancellation algorithms for canceling noise occurred during reception of the external audio signal. The memory 1840 may store a program for processing and control by the processor 1810, and store input/output data (e.g., a fine dust level, temperature and humidity data, a gas level, notification setting, filter replacement cycle information, etc.). The memory 1840 may include a storage medium of at least one type of a flash memory type, a hard disk type, a multimedia card micro type, a card type memory (e.g., a secure digital (SD) or extreme digital (XD) memory, etc.), a random-access memory (RAM), a static random-access memory (SRAM), a read-only memory (ROM), an electrically erasable programmable read-only memory (EEPROM), a programmable read-only memory (PROM), a magnetic memory, a magnetic disk, or an optical disk.

The programs stored in the memory 1840 may be classified into a plurality of modules according to functions thereof.

At least one AI model may be stored in the memory 1840. A function related to AI according to the disclosure may be performed through a processor and a memory. The processor may include one processor or a plurality of processors.

In this case, one processor or a plurality of processors may include a general-purpose processor such as a CPU, an application processor (AP), a digital signal processor (DSP), etc., a graphic-dedicated processor such as a GPU, a vision processing unit (VPU), etc., or an Al-dedicated processor such as a neural processing unit (NPU). One processor or a plurality of processors may control data to be processed according to a predefined operation rule or AI model stored in the memory. Alternatively, when one processor or a plurality of processors include an Al-dedicated processor, the Al-dedicated processor may be designed as a hardware structure specialized for processing a specific AI model. The predefined operation rule or AI model may be made through training. Herein, when the AI model is made through training, it may mean that a basic AI model is trained based on a learning algorithm by using multiple training data, such that the predefined operation rule or AI model configured to execute desired characteristics (or purpose) may be made.

Such training may be performed by an apparatus on which AI according to the disclosure is implemented, or by a separate server and/or system. Examples of a learning algorithm may include, but not limited to, supervised learning, unsupervised learning, semi-supervised learning, or reinforcement learning. The AI model may include a plurality of neural network layers. Each of the plurality of neural network layers may have a plurality of weight values, and perform a neural network operation through an operation between an operation result of a previous layer and the plurality of weight values.

The plurality of weight values of the plurality of neural network layers may be optimized by a training result of the AI model. For example, the plurality of weight values may be updated to reduce or minimize a loss value or a cost value obtained in the AI model during a training process. Examples of the AI neural network may include, but not limited to, a deep neural network (DNN), e.g., a convolutional neural network (CNN), a DNN, a recurrent neural network (RNN), a restricted Boltzmann machine (RBM), a deep belief network (DBN), a bidirectional recurrent deep neural network (BRDNN), a deep Q-network, ETC. The method according to an embodiment of the disclosure may be random-access implemented in the form of program commands that may be executed through various computer means and recorded on a computer-readable recording medium. The computer-readable recording medium may include a program command, a data file, a data structure, etc., alone or in a combined manner.

The program command recorded on the computer-readable recording medium may be a program command specially designed and configured for the disclosure or a program command known to be used by those skilled in the art of the computer software field. Examples of the computer-readable recording medium may include magnetic media such as hard disk, floppy disk, and magnetic tape, optical media such as compact disk read only memory (CD-ROM) and digital versatile disk (DVD), magneto-optical media such as floptical disk, and a hardware device especially configured to store and execute a program command, such as read only memory (ROM), random access memory (RAM), flash memory, etc. Examples of the program command may include not only a machine language code made by a compiler, but also a high-level language code executable by a computer using an interpreter. An embodiment of the disclosure may be implemented using a recording medium including a computer-executable instruction such as a computer-executable programming module. The computer-readable recording medium may be an available medium that is accessible by a computer, and include all of a volatile medium, a non-volatile medium, a separated medium, and a non-separated medium.

The computer-readable recording medium may also include both a computer storage medium and a communication medium. The computer storage medium may include all of a volatile medium, a non-volatile medium, a separated medium, and a non-separated medium, which are implemented by a method or technique for storing information such as a computer-readable instruction, a data structure, a programming module, or other data. The communication medium may include a computer-readable instruction, a data structure, a programming module, or other data of a modulated data signal like carriers, or other transmission mechanisms, and include an information delivery medium. In addition, some embodiments of the disclosure may be implemented by a computer program including a computer-executable instruction such as a computer program executed by a computer, or a computer program product. The machine-readable storage medium may be provided in the form of a non-transitory storage medium. Wherein, the term 'non-transitory storage medium' simply means that the storage medium is a tangible device, and does not include a signal (e.g., an electromagnetic wave), but this term does not differentiate between where data is semi-permanently stored in the storage medium and where the data is temporarily stored in the storage medium.

For example, the 'non-transitory storage medium' may include a buffer in which data is temporarily stored. A method according to an embodiment of the disclosure may be included and provided in a computer program product. The computer program product may be traded as a product between a seller and a buyer.

The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. When distributed online, at least a part of the computer program product (e.g., a downloadable app) may be at least temporarily stored or temporarily generated in the machine-readable storage medium, such as memory of the manufacturer's server, a server of the application store, or a relay server. While embodiments of the disclosure have been shown and described in detail, the scope of the disclosure is not limited to the description and various modifications and improvements made by those of ordinary skill in the art using the fundamental concept of the disclosure defined in the appended claims also fall within the scope of the disclosure.

According to an embodiment of the disclosure, there is provided a cooking apparatus driven by wireless power, the cooking apparatus including a wireless power receiving unit configured to wirelessly receive power from a wireless power transmitting unit and a processor configured to control the wireless power receiving unit. According to an embodiment of the disclosure, the wireless power receiving unit the cooking apparatus includes a first receiving coil and a second receiving coil having a shared center with the first receiving coil whereby the second receiving coil shares at least a part of a center of the first receiving coil, the first receiving coil and the second receiving coil being arranged on different layers along a longitudinal direction of the shared center.

According to an embodiment of the disclosure, each of a pickup coil and a communication coil may be placed in a different layer.

According to an embodiment of the disclosure, the cooking apparatus driven by wireless power may include a station(a heating apparatus) including a wireless power transmitting unit which wirelessly provides power to the wireless power receiving unit.

According to an embodiment of the disclosure, the cooking apparatus driven by wireless power, the communication coil may transmit a signal indicating the cooking apparatus is stationed on the heating apparatus to a communicatino coil of the heating apparatus.

According to an embodiment of the disclosure, there is provided a cooking apparatus driven by wireless power, the cooking apparatus including a wireless power receiving unit configured to wirelessly receive power from a wireless power transmitting unit and a processor configured to control the wireless power receiving unit. According to an embodiment of the disclosure, the wireless power receiving unit the cooking apparatus includes a first receiving coil and a second receiving coil not having a shared center with the first receiving coil. According to an embodiment of the disclosure, the cooking apparatus driven by wireless power includes the first receiving coil and the second receiving coil being arranged on different layers along a longitudinal direction.

According to an embodiment of the disclosure, a cooking apparatus driven by wireless power may include stacking a plurality of receiving coils having different heating levels whereby a planar area of the cooking apparaus may be reduced.

In addition, the wireless power-driven cooking apparatus according to an embodiment of the disclosure may maximize the spatial efficiency of the cooking apparatus by stacking a pickup coil configured to produce power and a communication coil configured to transmit a signal upon placement of the cooking apparatus on a station.

For example, the 'non-transitory storage medium' may include a buffer in which data is temporarily stored. A method according to an embodiment of the disclosure may be included and provided in a computer program product. The computer program product may be traded as a product between a seller and a buyer.

The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. When distributed online, at least a part of the computer program product (e.g., a downloadable app) may be at least temporarily stored or temporarily generated in the machine-readable storage medium, such as memory of the manufacturer's server, a server of the application store, or a relay server. While embodiments of the disclosure have been shown and described in detail, the scope of the disclosure is not limited to the description and various modifications and improvements made by those of ordinary skill in the art using the fundamental concept of the disclosure defined in the appended claims also fall within the scope of the disclosure.

## Claims

1. A cooking apparatus driven by wireless power, the cooking apparatus comprising:
a wireless power receiving unit configured to wirelessly receive power from a wireless power transmitting unit, the wireless power receiving unit including:
a first receiving coil, and
a second receiving coil having a shared center with the first receiving coil whereby the second receiving coil shares at least a part of a center of the first receiving coil, the first receiving coil and the second receiving coil being arranged on different layers along a longitudinal direction of the shared center; and
a processor configured to control the wireless power receiving unit.

2. The cooking apparatus of claim 1, wherein the first receiving coil has a first heating level that is different from a second heating level of the second receiving coil,
wherein a heating output of the first heating level is higher than a heating output of the second heating level, and the first receiving coil is arranged on the second receiving coil along the longitudinal direction of the shared center.

3. The cooking apparatus of claim 2, wherein a heating output of the first heating level is higher than a heating output of the second heating level, and the first receiving coil is arranged under the second receiving coil along the longitudinal direction of the shared center.

4. The cooking apparatus of any one of claims 1 to 3, wherein magnetic induction ferrites of the first receiving coil and the second receiving coil are arranged on a different layer than the first receiving coil and the second receiving coil.

5. The cooking apparatus of any one of claims 1 to 4, wherein a resonance capacitor is connected to each of the first receiving coil and the second receiving coil, and an output of the first receiving coil and an output of the second receiving coil have different resonant frequencies.

6. The cooking apparatus of any one of claims 1 to 6, wherein the wireless power receiving unit further comprises a pickup coil configured to supply power to a control unit comprising the processor and a communication coil configured to communicate with a station on which the cooking apparatus is to be stationed.

7. The cooking apparatus of claim 6, wherein the pickup coil and the communication coil are arranged on a different layer than the first receiving coil and the second receiving coil, along the longitudinal direction of the shared center between the first receiving coil and the second receiving coil.

8. The cooking apparatus of any one of claims 6 to 7, wherein the pickup coil and the communication coil have different centers.

9. The cooking apparatus of any one of claims 6 to 8, wherein the pickup coil and the communication coil are arranged to at least partially share a center, at least a part of which is shared between the first receiving coil and the second receiving coil.

10. The cooking apparatus of any one of claims 6 to 9, wherein the communication coil is arranged to at least partially share a center thereof with the pickup coil, and the communication coil is arranged inwardly from the pickup coil.

11. The cooking apparatus of claim 10, wherein the communication coil and the pickup coil are arranged on a same layer as the second receiving coil while at least partially sharing a center with the second receiving coil and are arranged inwardly from the second receiving coil, and the second receiving coil is arranged on a lower layer than the first receiving coil.

12. The cooking apparatus of any one of claims 6 to 10, wherein one of the pickup coil and the communication coil is arranged on a same layer as the first receiving coil, and another of the pickup coil and the communication coil is arranged on a same layer as the second receiving coil, the pickup coil and the communication coil being arranged inwardly from the first receiving coil and the second receiving coil unit, respectively.

13. The cooking apparatus of any one of claims 6 to 9, wherein the communication coil is arranged on a same layer as the first receiving coil or the second receiving coil and is arranged outwardly from the first receiving coil or the second receiving coil.

14. The cooking apparatus of any one of claims 1 to 13, further comprising a station comprising a wireless power transmitting unit configured to wirelessly supply power to the first receiving coil and the second receiving coil.

15. A cooking apparatus driven by wireless power, the cooking apparatus comprising:
a wireless power receiving unit that wirelessly receives power from a wireless power transmitting unit; and
a processor configured to control the wireless power receiving unit,
wherein the wireless power receiving unit comprises:
a receiving coil unit,
a pickup coil that supplies power to a control unit including the processor,
a communication coil that communicates with a station including the wireless power transmitting unit.
